(19) Europäisches Patentamt

European Patent Office

Office européen des brevets

(11) **EP 4 257 353 A1**

(12) **EUROPEAN PATENT APPLICATION**
published in accordance with Art. 153(4) EPC

(43) Date of publication:
**11.10.2023 Bulletin 2023/41**

(21) Application number: **21900578.2**

(22) Date of filing: **30.11.2021**

(51) International Patent Classification (IPC):
*B32B 27/00* (2006.01)       *B32B 27/18* (2006.01)
*C09J 11/04* (2006.01)       *C09J 201/00* (2006.01)
*C09J 7/10* (2018.01)        *C09J 7/30* (2018.01)
*H05B 6/54* (2006.01)        *B32B 7/027* (2019.01)

(52) Cooperative Patent Classification (CPC):
**B32B 7/027; B32B 27/00; B32B 27/18; C09J 7/10;
C09J 7/30; C09J 11/04; C09J 201/00; H05B 6/54**

(86) International application number:
**PCT/JP2021/043771**

(87) International publication number:
**WO 2022/118825 (09.06.2022 Gazette 2022/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.12.2020 JP 2020202036**

(71) Applicant: **LINTEC CORPORATION
Itabashi-ku
Tokyo 173-0001 (JP)**

(72) Inventors:
• **TAYA, Naoki
Tokyo 173-0001 (JP)**
• **TSUCHIBUCHI, Koji
Tokyo 173-0001 (JP)**

(74) Representative: **Gille Hrabal
Partnerschaftsgesellschaft mbB
Patentanwälte
Brucknerstraße 20
40593 Düsseldorf (DE)**

(54) **ADHESIVE FOR HIGH-FREQUENCY DIELECTRIC HEATING, STRUCTURE, AND METHOD FOR MANUFACTURING STRUCTURE**

(57)    A high-frequency-dielectric-heating adhesive (11, 12) for bonding three or more adherends (110, 120, 130) to each other is provided. A dielectric property DP1 of the adhesive (11, 12) and a dielectric property DP2 of each of the adherends (110, 120, 130) satisfy a numerical formula (Numerical Formula 1). The adherends (110, 120, 130) are each an adherend having no flow start temperature or an adherend having the flow start temperature. A flow start temperature TF2 (degrees C) of the adherends (110, 120, 130) and a flow start temperature TF1 (degrees C) of the adhesive (11, 12) satisfy a numerical formula (Numerical Formula 2). The dielectric properties DP1, DP2 are defined by values of dielectric properties ($\tan\delta/\varepsilon'r$), where $\tan\delta$ and $\varepsilon'r$ are respectively a dielectric dissipation factor and a relative permittivity at 23 degrees C and a frequency of 40.68 MHz,

$$0 < DP1 - DP2 \ldots (\text{Numerical Formula 1})$$

$$-5 \leq TF2 - TF1 \ldots (\text{Numerical Formula 2}).$$

EP 4 257 353 A1

# FIG.1

**Description**

TECHNICAL FIELD

The present invention relates to a high-frequency-dielectric-heating adhesive, an assembly, and a producing method of the assembly.

BACKGROUND ART

In order to bond a plurality of adherends to produce a laminate, it has been proposed, for instance, to perform dielectric heating, induction heating, ultrasonic welding, or laser welding, with an adhesive being interposed between the adherends.

As an example, Patent Literature 1 discloses a composite glass (laminate) provided by laminating top and bottom layers (glass plates) and intermediate layers (a plurality of plastic sheets) with an ethylene-vinyl acetate copolymer resin sheet (EVA sheet) interposed therebetween.

Another example is disclosed in Patent Literature 2, where a motor core material in a form of fifty electromagnetic steel plates laminated via adhesive insulation films is pressed with a press cylinder of a high-frequency dielectric heating device and, simultaneously, applied with high frequency waves between electrodes to produce a laminated iron core (laminate). A main component of the adhesive insulation film is an organic resin (e.g. an epoxy resin).

CITATION LIST

PATENT LITERATURE(S)

Patent Literature 1 JP 2003-252658 A
Patent Literature 2: JP 11-187626 A

SUMMARY OF THE INVENTION

PROBLEM(S) TO BE SOLVED BY THE INVENTION

In the process for producing the composite glass disclosed in Patent Literature 1, the laminate of the glass plates, EVA sheets, and polycarbonate sheets is put into an oven vacuum chamber, which is heated from a room temperature to 130 degrees C and decompressed to 70 cmHg. In order to produce the composite glass (laminate) disclosed in Patent Literature 1, it is necessary to bond the glass plates and the polycarbonate sheets after raising the temperature and lowering the pressure in the vacuum chamber. Accordingly, it is difficult to bond these components (adherends) within a short time.

In Patent Literature 2, it is disclosed that an application time for the high-frequency waves in producing the laminated iron core (laminate) is two or four minutes, thus also failing to bond the steel plates (adherends) within a short time.

An object of the invention is to provide a high-frequency-dielectric-heating adhesive capable of bonding three or more adherends to each other in a single process within a short time, an assembly provided by bonding three or more adherends to each other with the high-frequency-dielectric-heating adhesive, and a producing method of the assembly.

MEANS FOR SOLVING THE PROBLEM(S)

According to an aspect of the invention, there is provided a high-frequency-dielectric-heating adhesive for bonding three or more adherends to each other, the adhesive containing: a thermoplastic resin; and a dielectric filler configured to generate heat upon application of a high-frequency electric field, a dielectric property DP1 of the high-frequency-dielectric-heating adhesive and a dielectric property DP2 of each of the three or more adherends satisfy a relationship of a numerical formula (Numerical Formula 1) below, where the three or more adherends are each an adherend having no flow start temperature or an adherend having the flow start temperature and a flow start temperature TF2 (degrees C) of each of the three or more adherends and a flow start temperature TF1 (degrees C) of the high-frequency-dielectric-heating adhesive satisfy a numerical formula (Numerical Formula 2) below.

$$0 < DP1 - DP2 \quad \ldots (\text{Numerical Formula 1})$$

$$-5 \leq TF2 - TF1 \quad \ldots (\text{Numerical Formula 2})$$

In the above formulae, the dielectric property DP1 and the dielectric property DP2 are respectively values of dielectric properties ($\tan\delta/\varepsilon'r$) of the high-frequency-dielectric-heating adhesive and the three or more adherends,

$\tan\delta$ is a dielectric dissipation factor at 23 degrees C and at a frequency of 40.68 MHz, and
$\varepsilon'r$ is a relative permittivity at 23 degrees C and at a frequency of 40.68 MHz.

In the high-frequency-dielectric-heating adhesive according to the above aspect of the invention, it is preferable that, when at least one of the three or more adherends is an adherend having the flow start temperature, the flow start temperature TF2 of the at least one of the three or more adherends having the flow start temperature is 90 degrees C or more.

In the high-frequency-dielectric-heating adhesive according to the above aspect of the invention, it is preferable that the flow start temperature TF1 of the high-frequency-dielectric-heating adhesive is in a range from 80 degrees C to 200 degrees C.

In the high-frequency-dielectric-heating adhesive according to the above aspect of the invention, it is preferable that the dielectric property DP2 of each of the three or more adherends is 0.015 or less.

In the high-frequency-dielectric-heating adhesive according to the above aspect of the invention, it is preferable that the dielectric property DP1 of the high-frequency-dielectric-heating adhesive is 0.005 or more.

In the high-frequency-dielectric-heating adhesive according to the above aspect of the invention, it is preferable that the high-frequency-dielectric-heating adhesive is in a form of an adhesive sheet.

In the high-frequency-dielectric-heating adhesive according to the above aspect of the invention, it is preferable that a thickness TS1 of the adhesive sheet and a thickness TS2 of each of the three or more adherends satisfy a relationship of a numerical formula (Numerical Formula 3) below.

$$TS1 < TS2 \quad \ldots (\text{Numerical Formula 3})$$

In the high-frequency-dielectric-heating adhesive according to the above aspect of the invention, it is preferable that the thickness TS1 of the adhesive sheet is in a range from 5 $\mu$m to 2000 $\mu$m.

In the high-frequency-dielectric-heating adhesive according to the above aspect of the invention, it is preferable that a thickness accuracy of the adhesive sheet is within $\pm10\%$.

According to another aspect of the invention, there is provided an assembly including the high-frequency-dielectric-heating adhesive according to the above-described aspect of the invention and the three or more adherends bonded by the high-frequency-dielectric-heating adhesive.

According to still another aspect of the invention, there is provided a producing method of an assembly, the method including: placing the high-frequency-dielectric-heating adhesive according to the above-described aspect of the invention between corresponding ones of the three or more adherends; and applying a high-frequency electric field to the high-frequency-dielectric-heating adhesive to bond the three or more adherends to each other.

In the producing method of the assembly according to the above aspect of the invention, it is preferable that the three or more adherends and the high-frequency-dielectric-heating adhesive are placed in between electrodes of a dielectric heating device, and the high-frequency electric field is applied while the three or more adherends and the high-frequency-dielectric-heating adhesive are pressed by the electrodes.

According to any one of the aspects of the invention, the high-frequency-dielectric-heating adhesive capable of bonding the three or more adherends to each other in a single process within a short time can be provided. Further, according to any one of the aspects of the invention, the assembly including three or more adherends bonded to each other by the high-frequency-dielectric-heating adhesive and the producing method of the assembly can be provided.

BRIEF DESCRIPTION OF DRAWINGS

Fig. 1 is a schematic cross-sectional view of an assembly according to an exemplary embodiment.
Fig. 2 is a schematic diagram for explaining a high-frequency dielectric heating process performed with a high-frequency-dielectric-heating adhesive and a dielectric heating device according to the exemplary embodiment.
Fig. 3 is a schematic perspective view for explaining a production process of an assembly used for evaluation of adhesiveness in Examples.

DESCRIPTION OF EMBODIMENT(S)

High-Frequency-Dielectric-Heating Adhesive

A high-frequency-dielectric-heating adhesive according to the present exemplary embodiment contains a thermoplastic resin and a dielectric filler that generates heat upon application of a high-frequency electric field. The high-frequency electric field is an electric field whose direction is reversed at high frequency.
The thermoplastic resin and the dielectric filler contained in the high-frequency-dielectric-heating adhesive according to the present exemplary embodiment will be sometimes herein referred to as a thermoplastic resin (A) and a dielectric filler (B), respectively.
The high-frequency-dielectric-heating adhesive according to the present exemplary embodiment is a high-frequency-dielectric-heating adhesive for bonding at least three adherends to each other.
A dielectric property DP1 of the high-frequency-dielectric-heating adhesive and a dielectric property DP2 of each of the three or more adherends satisfy a relationship of a numerical formula (Numerical Formula 1) below. The three or more adherends are each an adherend having no flow start temperature or an adherend having the flow start temperature. A flow start temperature TF2 (degrees C) of the adherend and a flow start temperature TF1 (degrees C) of the high-frequency-dielectric-heating adhesive satisfy a numerical formula (Numerical Formula 2) below.

$$0 < DP1 - DP2 \quad \ldots \text{(Numerical Formula 1)}$$

$$-5 \leq TF2 - TF1 \quad \ldots \text{(Numerical Formula 2)}$$

In the above, the dielectric property DP1 and the dielectric property DP2 are respectively values of the dielectric property $(\tan\delta/\varepsilon'r)$ of the high-frequency-dielectric-heating adhesive and the three or more adherends, and $\tan\delta$ and $\varepsilon'r$ are a dielectric dissipation factor and a relative permittivity, respectively, at 23 degrees C and at a frequency of 40.68 MHz.

Dielectric Property

The relationship between the dielectric property DP1 of the high-frequency-dielectric-heating adhesive and the dielectric property DP2 of the adherends will be described below. When, for instance, three adherends are to be bonded with the use of the high-frequency-dielectric-heating adhesive, the dielectric property DP1 of the high-frequency-dielectric-heating adhesive satisfies the relationship of the numerical formula (Numerical Formula 1) with respect to the dielectric property DP2 of each of the three adherends. Additionally, for instance, when the dielectric properties DP2 of the three adherends are mutually different values (DP2A, DP2B, and DP2C), the high-frequency-dielectric-heating adhesive satisfies relationships of formulae (Numerical Formula 1A), (Numerical Formula 1B), and (Numerical Formula 1C) below.

$$0 < DP1 - DP2A \quad \ldots \text{(Numerical Formula 1A)}$$

$$0 < DP1 - DP2B \quad \ldots \text{(Numerical Formula 1B)}$$

$$0 < DP1 - DP2C \quad \ldots \text{(Numerical Formula 1C)}$$

A difference (DP1 - DP2) between the dielectric property DP1 of the high-frequency-dielectric-heating adhesive and the dielectric property DP2 of each of the adherends preferably satisfies a relationship of a numerical formula (Numerical Formula 1-1) below, more preferably a relationship of a numerical formula (Numerical Formula 1-2) below.

$$0.005 \leq DP1 - DP2 \quad \ldots \text{(Numerical Formula 1-1)}$$

$$0.01 \leq DP1 - DP2 \quad \ldots \text{(Numerical Formula 1-2)}$$

Usually, the difference (DP1 - DP2) between the dielectric property DP1 of the high-frequency-dielectric-heating adhesive and the dielectric property DP2 of the adherends preferably satisfies a relationship of a numerical formula (Numerical Formula 1-3) below, more preferably a relationship of a numerical formula (Numerical Formula 1-4) below.

$$DP1 - DP2 \leq 0.1 \quad \ldots \text{(Numerical Formula 1-3)}$$

$$DP1 - DP2 \leq 0.05 \quad \ldots \text{(Numerical Formula 1-4)}$$

The dielectric property DP1 of the high-frequency-dielectric-heating adhesive according to the present exemplary embodiment is preferably 0.005 or more, more preferably 0.008 or more, and still more preferably 0.01 or more.

The dielectric property DP1 of the high-frequency-dielectric-heating adhesive according to the present exemplary embodiment is preferably 0.1 or less, more preferably 0.08 or less, still more preferably 0.05 or less, and still further more preferably 0.03 or less.

The high-frequency-dielectric-heating adhesive in which the dielectric property DP1 is 0.005 or more can prevent occurrence of failure in generating desired heat when applied with dielectric heating, and consequent difficulty in firmly bonding the high-frequency-dielectric-heating adhesive to the adherends.

The high-frequency-dielectric-heating adhesive in which the dielectric property DP1 is 0.1 or less can easily prevent overheating and thus is unlikely to cause damage on a part of the adherends in contact with the high-frequency-dielectric-heating adhesive.

The dielectric property DP2 of each of the three or more adherends according to the present exemplary embodiment is preferably 0.015 or less, more preferably 0.01 or less, and still more preferably 0.005 or less.

With the dielectric property DP2 of the adherends being 0.015 or less, the heat generated by the adherends can be restrained, thus easily bonding the adherends to each other without impairing the shape of the adherends.

Usually, the dielectric property DP2 of the adherends is 0 or more.

The dielectric property ($\tan\delta/\varepsilon$') is a value obtained by dividing a dielectric dissipation factor ($\tan\delta$) by a relative permittivity ($\varepsilon$'), the dielectric dissipation factor and the relative permittivity being measured using an impedance material analyzer or the like.

The dielectric dissipation factor ($\tan\delta$) and the relative permittivity ($\varepsilon$'r) for the dielectric properties of the high-frequency-dielectric-heating adhesive and the adherends can be easily and correctly measured using an impedance material analyzer.

It should be noted that details of the measurement method for the dielectric property of the high-frequency-dielectric-heating adhesive and the adherends are as follows. Initially, measurement sheets of the high-frequency-dielectric-heating adhesive and the adherends are prepared. If it is necessary to produce each measurement sheet from an assembly, the assembly is cut or shaved to produce a measurement sheet of a uniform thickness. The high-frequency-dielectric-heating adhesive not in a form of a sheet (e.g. pellet-shaped high-frequency-dielectric-heating adhesive) is shaped into a sheet using a hot press or the like, thereby obtaining a measurement sheet. The thickness of the measurement sheet is, for instance, in a range from 10 $\mu$m to 2 mm. The relative permittivity ($\varepsilon$'r) and the dielectric dissipation factor ($\tan\delta$) of the thus-produced sheets are measured at 23 degrees C and at 40.68 MHz frequency using an RF impedance material analyzer E4991A (manufactured by Agilent Technologies, Inc.) to calculate the value of the dielectric property ($\tan\delta/\varepsilon$').

Flow Start Temperature

The relationship between the flow start temperature TF1 of the high-frequency-dielectric-heating adhesive and the flow start temperature TF2 of the adherends will be described below.

When all of the three or more adherends have the flow start temperature, the flow start temperature of each of the adherends and the flow start temperature of the high-frequency-dielectric-heating adhesive satisfy the relationship of the numerical formula (Numerical Formula 2). For instance, when three adherends, all of which have the flow start temperature, are to be bonded, the flow start temperature of each of the three adherends satisfies the relationship of the numerical formula (Numerical Formula 2). For instance, supposing that the flow start temperatures TF2 of the three adherends are mutually different values (TF2A (degrees C), TF2B (degrees C), and TF2C (degrees C)), the flow start temperatures satisfy relationships of formulae (Numerical Formula 2A), (Numerical Formula 2B), and (Numerical Formula 2C) below.

$$-5 \leq TF2A - TF1 \quad \ldots (\text{Numerical Formula 2A})$$

$$-5 \leq TF2B - TF1 \quad \ldots (\text{Numerical Formula 2B})$$

$$-5 \leq TF2C - TF1 \quad \ldots (\text{Numerical Formula 2C})$$

When at least one of the three or more adherends has no flow start temperature, it is not necessary for the high-frequency-dielectric-heating adhesive to satisfy the relationship of the numerical formula (Numerical Formula 2) with respect to the three or more adherends with respect to the adherend(s) having no flow start temperature.

A difference (TF2 - TF1) between the flow start temperature TF2 (degrees C) of the adherends and the flow start temperature TF1 (degrees C) of the high-frequency-dielectric-heating adhesive preferably satisfy a relationship of a numerical formula (Numerical Formula 2-1) below, more preferably a relationship of a numerical formula (Numerical Formula 2-2) below, still more preferably a relationship of a numerical formula (Numerical Formula 2-3) below, and still further more preferably a relationship of a numerical formula (Numerical Formula 2-4) below.

$$0 \leq TF2 - TF1 \quad \ldots (\text{Numerical Formula 2-1})$$

$$5 \leq TF2 - TF1 \quad \ldots (\text{Numerical Formula 2-2})$$

$$10 \leq TF2 - TF1 \quad \ldots (\text{Numerical Formula 2-3})$$

$$15 \leq TF2 - TF1 \quad \ldots (\text{Numerical Formula 2-4})$$

A difference (TF2 - TF1) between the flow start temperature TF2 (degrees C) of the adherends and the flow start temperature TF1 of the high-frequency-dielectric-heating adhesive preferably satisfies a relationship of a numerical formula (Numerical Formula 2-5) below, more preferably a relationship of a numerical formula (Numerical Formula 2-6) below.

$$TF2 - TF1 \leq 1100 \quad \ldots (\text{Numerical Formula 2-5})$$

$$TF2 - TF1 \leq 300 \quad \ldots (\text{Numerical Formula 2-6})$$

When at least one of the three or more adherends has the flow start temperature, the flow start temperature TF2 of the at least one of the adherends is preferably 90 degrees C or more, more preferably 100 degrees C or more, still more preferably 110 degrees C or more, still further more preferably 120 degrees C or more, and yet still further more preferably 130 degrees C or more.

The flow start temperature TF2 of the at least one of the adherends having the flow start temperature is preferably 1200 degrees C or less, more preferably 400 degrees C or less.

When the at least one of the adherends is made of, for instance, a ceramic or a curable resin, the flow start temperature TF2 of the adherend has no upper limit.

With the flow start temperature TF2 of the at least one of the adherends being 90 degrees C or more, the adherends can be easily bonded without impairing the shape thereof during the bonding process.

The flow start temperature TF1 of the high-frequency-dielectric-heating adhesive according to the present exemplary embodiment is preferably 80 degrees C or more, more preferably 90 degrees C or more, and still more preferably 100 degrees C or more.

The flow start temperature TF1 of the high-frequency-dielectric-heating adhesive according to the present exemplary embodiment is preferably 200 degrees C or less, more preferably 180 degrees C or less, and still more preferably 160 degrees C or less.

With the flow start temperature TF1 of the high-frequency-dielectric-heating adhesive being 80 degrees C or more, the assembly produced with the use of the high-frequency-dielectric-heating adhesive is likely to exhibit heat resistance for daily use.

With the flow start temperature TF1 of the high-frequency-dielectric-heating adhesive being 200 degrees C or less, the time for melting the high-frequency-dielectric-heating adhesive can be easily kept from being lengthened and a bonding strength between the high-frequency-dielectric-heating adhesive and the adherends is likely to be ensured.

The flow start temperature can be measured according to a method described in a corresponding item of later-described Examples.

The shape of the high-frequency-dielectric-heating adhesive according to the present exemplary embodiment, which is not particularly limited, is preferably sheet-shaped. In other words, the high-frequency-dielectric-heating adhesive according to the present exemplary embodiment is preferably in a form of an adhesive sheet (sometimes referred to as a high-frequency-dielectric-heating adhesive sheet hereinafter). The high-frequency-dielectric-heating adhesive embodied in a form of the adhesive sheet can further shorten the time required for the manufacturing process of the assembly.

A thickness TS1 of the adhesive sheet and a thickness TS2 of each of the three or more adherends according to the present exemplary embodiment preferably satisfy a relationship of a numerical formula (Numerical Formula 3) below.

$$TS1 < TS2 \ldots (Numerical\ Formula\ 3)$$

The high-frequency-dielectric-heating adhesive according to the present exemplary embodiment, which is embodied in a form of an adhesive sheet that satisfies the relationship of the above numerical formula (Numerical Formula 3), can prevent excessive heat generation from the adhesive sheet when the high-frequency electric field is applied, thereby further reducing heat damage on the adherends.

The thickness TS1 of the adhesive sheet of the present exemplary embodiment is preferably 5 $\mu$m or more, more preferably 10 $\mu$m or more, still more preferably 30 $\mu$m or more, and still further more preferably 50 $\mu$m or more.

The adhesive sheet with the thickness TS1 of 5 $\mu$m or more easily conforms to undulations of the adherend when being bonded with the adherend, thereby easily easily exhibiting the bonding strength.

The upper limit of the thickness TS1 of the adhesive sheet is not particularly limited. The thickness of the adhesive sheet, whose increase results in an increase in the entire weight of the assembly produced by bonding the adhesive sheet and the adherends, is preferably in a range without causing any problem during actual use. Considering practicality and formability of the adhesive sheet as well, the thickness TS1 of the adhesive sheet according to the present exemplary embodiment is preferably 2000 $\mu$m or less, more preferably 1000 $\mu$m or less, and still more preferably 600 $\mu$m or less.

A thickness accuracy of the adhesive sheet according to the present exemplary embodiment is preferably within $\pm10\%$, more preferably within $\pm8\%$, and still more preferably within $\pm5\%$.

The adhesive sheet according to the present exemplary embodiment in which the thickness accuracy is within $\pm10\%$ allows the laminate to be stably placed on a bonding machine during the bonding process.

Further, since the pressure is evenly applied on the surface of the adhesive sheet at the time of applying the high-frequency electric field, the laminate can be restrained from being shifted and/or deformed.

The thickness accuracy of the adhesive sheet can be measured according to a method described in a corresponding item of later-described Examples.

Usually, the thickness accuracy of the adhesive sheet is 0% or more.

The high-frequency-dielectric-heating adhesive in a form of the adhesive sheet is not only easy to handle but also shows improved workability when being bonded with the adherend as compared with a liquid adhesive that needs to be applied.

Further, the thickness or the like of the high-frequency-dielectric-heating adhesive in a form of the adhesive sheet can be controlled as desired. The adhesive sheet is thus also usable in a roll-to-roll system and can be machined to have a desired area and shape by blanking or the like according to an area to be bonded with the adherend and a shape of the adherend. Accordingly, the high-frequency-dielectric-heating adhesive in a form of the adhesive sheet is significantly advantageous also in view of manufacturing process.

Thermoplastic Resin (A)

Thermoplastic Resin

The type of the thermoplastic resin (A) is not particularly limited.

In view of, for instance, an excellent meltability, a predetermined level of heat resistance, and the like, the thermoplastic resin (A) is preferably at least one resin selected from the group consisting of a polyolefin resin, styrene resin, polyacetal resin, polycarbonate resin, acrylic resin, polyamide resin, polyimide resin, polyvinyl acetate resin, phenoxy resin, and polyester resin.

In the high-frequency-dielectric-heating adhesive according to the present exemplary embodiment, the thermoplastic resin (A) is preferably a polyolefin resin or a styrene resin, more preferably a polyolefin resin. With the use of the thermoplastic resin (A) in a form of a polyolefin resin or styrene resin, the high-frequency-dielectric-heating adhesive is easily meltable when the high-frequency electric field is applied, thereby allowing the high-frequency-dielectric-heating adhesive according to the present exemplary embodiment and the adherends to be easily bonded.

Herein, the polyolefin resin, which encompasses a polyolefin resin having a polar moiety and a polyolefin resin having no polar moiety, will be referred to as a polyolefin resin having a polar moiety or a polyolefin resin having no polar moiety when the presence or absence of the polar moiety is specified.

The thermoplastic resin (A) is also preferably a polyolefin resin having a polar moiety. The thermoplastic resin (A) is optionally a polyolefin resin having no polar moiety.

Polyolefin Resin

Examples of the polyolefin resin for the thermoplastic resin (A) include: homopolymer resins such as polyethylene, polypropylene, polybutene, and polymethylpentene; and $\alpha$-olefin resins in a form of a copolymer of monomers selected from the group consisting of ethylene, propylene, butene, hexene, octene, and 4-methylpentene. The polyolefin resin for the thermoplastic resin (A) is optionally a single type of a resin or alternatively a combination of two or more resins.

Polyolefin Resin Having Polar Moiety

The polar moiety, which is a part of the polyolefin resin having a polar moiety, is not particularly limited as long as the moiety can polarize the polyolefin resin. The polyolefin resin having a polar moiety, which exhibits high bonding force with an adherend, is preferable.

The polyolefin thermoplastic resin having a polar moiety is optionally a copolymer of an olefin monomer and a monomer having a polar moiety. Alternatively, the polyolefin thermoplastic resin having a polar moiety is optionally a resin in which a polar moiety is introduced through modification, for instance, an addition reaction, into an olefin polymer obtained through polymerization of olefin monomers.

The type of the olefin monomer constituting the polyolefin resin having a polar moiety is not particularly limited. Examples of the olefin monomer include ethylene, propylene, butene, hexene, octene, and 4-methyl-1-pentene. One of the above examples may be used alone or a combination of two or more thereof may be used as the olefin monomer.

The olefin monomer is preferably at least one of ethylene or propylene in view of its excellent mechanical strength and stable bonding properties.

Preferably, a constituent unit derived from olefin in the polyolefin resin having the polar moiety is a constituent unit derived from ethylene or propylene.

Examples of the polar moiety include a hydroxyl group, carboxy group, vinyl acetate moiety, and anhydride moiety. Examples of the polar moiety also include acid-modified moiety introduced into the polyolefin resin through acid modification.

The polar moiety in a form of the acid-modified structure is introduced by acid modification of a thermoplastic resin (e.g., a polyolefin resin). A compound used for the acid modification of the thermoplastic resin (e.g., polyolefin resin) is exemplified by an unsaturated carboxylic acid derivative component derived from any one of an unsaturated carboxylic acid, an acid anhydride of an unsaturated carboxylic acid, and an ester of an unsaturated carboxylic acid. Herein, the polyolefin resin having the acid-modified moiety is occasionally referred to as an acid-modified polyolefin resin.

Examples of the unsaturated carboxylic acid include an acrylic acid, a methacrylic acid, a maleic acid, a fumaric acid, an itaconic acid, and a citraconic acid.

Examples of the acid anhydride of the unsaturated carboxylic acid include maleic anhydride, itaconic anhydride, and citraconic anhydride.

Examples of the ester of the unsaturated carboxylic acid include methyl acrylate, ethyl acrylate, methyl methacrylate, ethyl methacrylate, butyl methacrylate, dimethyl maleate, monomethyl maleate, dimethyl fumarate, diethyl fumarate, dimethyl itaconate, diethyl itaconate, dimethyl citraconate, diethyl citraconate, and dimethyl tetrahydrophthalate anhydride.

Dielectric Filler (B)

The dielectric filler (B) generates heat upon application of a high-frequency electric field.

Preferably, the dielectric filler (B) is a filler that generates heat upon application of a high-frequency electric field having a frequency range from 3 MHz to 300 MHz. Preferably, the dielectric filler (B) is a filler that generates heat upon application of a high-frequency electric field having, within the frequency range from 3 MHz to 300 MHz, for instance, a frequency of 13.56 MHz, 27.12 MHz, or 40.68 MHz.

Type of Dielectric Filler (B)

The dielectric filler (B) is preferably a single one or a combination of two or more of zinc oxide, silicon carbide (SiC), anatase-type titanium oxide, barium titanate, barium titanate zirconate, lead titanate, potassium niobate, rutile-type titanium oxide, hydrated aluminum silicate, inorganic substances having crystallization water such as hydrated aluminosilicate salt of alkali metal, and inorganic substances having crystallization water such as hydrated aluminosilicate salt of alkaline earth metal.

Preferably, the dielectric filler (B) contains at least one of compounds selected from the group consisting of zinc oxide, silicon carbide, barium titanate, and titanium oxide.

Among the dielectric fillers exemplified above, the dielectric filler (B) is more preferably zinc oxide in view of its wide variety of types and selectability from among various shapes and sizes, which allow the bonding properties and mechanical properties of the high-frequency-dielectric-heating adhesive to be modified depending on the usage thereof. With the use of zinc oxide for the dielectric filler (B), a colorless high-frequency-dielectric-heating adhesive can be obtained. Zinc oxide, whose density is small among the dielectric fillers, is unlikely to increase the total weight of a bonded component when being contained in the high-frequency-dielectric-heating adhesive as the dielectric filler (B) for bonding the adherends, as compared with the use of adhesives containing other dielectric fillers. Since the hardness of zinc oxide is not excessively high among ceramics, zinc oxide is unlikely to damage the machine for producing the high-frequency-dielectric-heating adhesive. Zinc oxide, which is an inactive oxide, less damages a thermoplastic resin even when blended therewith.

Further, titanium oxide as the dielectric filler (B) is preferably at least one of anatase-type titanium oxide or rutile-type titanium oxide, more preferably anatase-type titanium oxide in terms of its excellent dielectric property.

Volume Content Ratio

The volume content ratio of the dielectric filler (B) in the high-frequency-dielectric-heating adhesive is preferably 5 vol% or more, more preferably 8 vol% or more, and still more preferably 10 vol% or more.

The volume content ratio of the dielectric filler (B) is preferably 50 vol% or less, more preferably 40 vol% or less, still more preferably 35 vol% or less, and still further more preferably 25 vol% or less.

With the volume content ratio of the dielectric filler (B) in the high-frequency-dielectric-heating adhesive being 5 vol% or more, heat-generation properties can be improved, thereby facilitating firm bonding between the high-frequency-dielectric-heating adhesive and the adherends.

With the volume content ratio of the dielectric filler (B) in the high-frequency-dielectric-heating adhesive being 50 vol% or less, decrease in the strength of the adhesive can be prevented, consequently preventing decrease in the bonding strength with the use of the adhesive. Further, the high-frequency-dielectric-heating adhesive according to the present exemplary embodiment, which is in a form of an adhesive sheet and contains the dielectric filler (B) at the volume content ratio of 50 vol% or less, is likely to exhibit flexibility for the sheet and prevent reduction in toughness, thereby allowing the high-frequency-dielectric-heating adhesive sheet to be processed into a desired shape in a subsequent step.

Since the thermoplastic resin (A) and the dielectric filler (B) are contained in the high-frequency-dielectric-heating adhesive according to the present exemplary embodiment, the volume content ratio of the dielectric filler (B) is preferably 5 vol% or more, more preferably 8 vol% or more, and still more preferably 10 vol% or more with respect to a total volume of the thermoplastic resin (A) and the dielectric filler (B). Further, the volume content ratio of the dielectric filler (B) is preferably 50 vol% or less, more preferably 40 vol% or less, still more preferably 35 vol% or less, and still further more preferably 25 vol% or less with respect to a total volume of the thermoplastic resin (A) and the dielectric filler (B).

Average Particle Diameter

The volume average particle diameter of the dielectric filler (B) is preferably 1 $\mu$m or more, more preferably 2 $\mu$m or more, and still more preferably 3 $\mu$m or more.

The volume average particle diameter of the dielectric filler (B) is preferably 30 $\mu$m or less, more preferably 25 $\mu$m or less, and still more preferably 20 $\mu$m or less.

With the volume average particle diameter of the dielectric filler (B) being 1 $\mu$m or more, the high-frequency-dielectric-heating adhesive exhibits high heat generation performance upon application of the high-frequency electric field, so that the adhesive layer can be firmly bonded with the adherends within a short time.

With the volume average particle diameter of the dielectric filler (B) being 30 $\mu$m or less, the high-frequency-dielectric-heating adhesive exhibits high heat generation performance upon application of the high-frequency electric field, so that the adhesive layer can be firmly bonded with the adherends within a short time. Further, when the high-frequency-dielectric-heating adhesive according to the present exemplary embodiment is in a form of an adhesive sheet, decrease in the strength of the high-frequency-dielectric-heating adhesive sheet can be prevented with the volume average particle diameter of the dielectric filler (B) being 30 μm or less.

The volume average particle diameter of the dielectric filler (B) is measured by a method as described below. A particle size distribution of the dielectric filler (B) is measured by a laser diffraction/scattering method and the volume average particle diameter is calculated from a result of the particle size distribution measurement in accordance with JIS Z 8819-2: 2001.

When the high-frequency-dielectric-heating adhesive according to the present exemplary embodiment is in a form of an adhesive sheet, it is preferable that an average particle diameter $D_F$ of the dielectric filler (B) and the thickness TS1 of the adhesive sheet satisfy the relationship of $1 \leq TS1/D_F \leq 2500$.

$TS1/D_F$ is preferably 1 or more, more preferably 2 or more, still more preferably 5 or more, still further more preferably 10 or more, and yet still further more preferably 20 or more. With $TS1/D_F$ being 1 or more, decrease in bonding strength caused by contact of the dielectric filler (B) with the adherend can be prevented.

$TS1/D_F$ is preferably 2500 or less, more preferably 2000 or less, still more preferably 1750 or less, still further more preferably 1000 or less, yet still further more preferably 500 or less, even still further more preferably 100 or less, and yet even still further more preferably 50 or less. With $TS1/D_F$ being 2500 or less, load applied on a sheet producing device in producing the high-frequency-dielectric-heating adhesive sheet can be reduced.

Additive(s)

The high-frequency-dielectric-heating adhesive according to the exemplary embodiment may or may not contain an additive.

When the high-frequency-dielectric-heating adhesive according to the exemplary embodiment contains an additive, examples of the additive include a tackifier, a plasticizer, a wax, a colorant, an antioxidant, an ultraviolet absorber, an antimicrobial agent, a coupling agent, a viscosity modifier, an organic filler, and an inorganic filler. The organic and inorganic fillers as the additive are different from the dielectric filler.

The tackifier and plasticizer allow for improving the melting properties and bonding properties of the high-frequency-dielectric-heating adhesive.

Examples of the tackifier include a rosin derivative, a polyterpene resin, an aromatic modified terpene resin, a hydride of an aromatic modified terpene resin, a terpene phenol resin, a coumarone-indene resin, an aliphatic petroleum resin, an aromatic petroleum resin, and a hydride of an aromatic petroleum resin.

Examples of the plasticizer include a petroleum process oil, a natural oil, diacid dialkyl, and a low-molecular-weight liquid polymer. Examples of the petroleum process oil include a paraffin process oil, a naphthene process oil, and an aromatic process oil. Examples of the natural oil include a castor oil and a tall oil. Examples of diacid dialkyl include dibutyl phthalate, dioctyl phthalate, and dibutyl adipate. Examples of the low-molecular-weight liquid polymer include liquid polybutene and liquid polyisoprene.

When the high-frequency-dielectric-heating adhesive according to the exemplary embodiment contains an additive, the content ratio of the additive in the high-frequency-dielectric-heating adhesive is, normally, based on a total mass of the high-frequency-dielectric-heating adhesive, preferably 0.01 mass% or more, more preferably 0.05 mass% or more, and still more preferably 0.1 mass% or more. Further, the content ratio of the additive in the high-frequency-dielectric-heating adhesive is preferably 20 mass% or less, more preferably 15 mass% or less, and still more preferably 10 mass% or less.

The high-frequency-dielectric-heating adhesive according to the exemplary embodiment preferably contains no solvent. The high-frequency-dielectric-heating adhesive containing no solvent is not likely to have a problem of volatile organic compounds (VOC) that may otherwise be caused by an adhesive used for bonding with an adherend.

Preferably, the high-frequency-dielectric-heating adhesive according to the exemplary embodiment contains no conductive substance such as a metal, carbon, or a carbon compound containing carbon as a main component (e.g., carbon black). The high-frequency-dielectric-heating adhesive according to the present exemplary embodiment preferably contains, for instance, none of carbon steel, α iron, γ iron, δ iron, copper, iron oxide, yellow copper, aluminum, iron-nickel alloy, iron-nickel-chromium alloy, carbon fiber, and carbon black.

When the high-frequency-dielectric-heating adhesive according to the exemplary embodiment contains conductive substances, the content ratios of the respective conductive substances in the adhesive layer are each independently, based on a total mass of the adhesive layer, preferably 20 mass% or less, more preferably 10 mass% or less, still more preferably 5 mass% or less, still further more preferably 1 mass% or less, and yet still further more preferably 0.1 mass% or less.

Particularly preferably, the adhesive contains 0 mass% of the conductive substances.

With the content ratios of the conductive substances in the adhesive being 20 mass% or less, carbonization of a bonding portion and an adherend caused by electrical breakdown during a dielectric heating process is easily preventable.

The total of the content ratios of the thermoplastic resin (A) and the dielectric filler (B) in the high-frequency-dielectric-heating adhesive according to the exemplary embodiment is preferably 80 mass% or more, more preferably 90 mass% or more, and still more preferably 99 mass% or more.

Method of Producing High-frequency-Dielectric-Heating Adhesive

The high-frequency-dielectric-heating adhesive according to the exemplary embodiment is producible, for instance, by mixing the components described above. The high-frequency-dielectric-heating adhesive according to the present exemplary embodiment in a form of an adhesive sheet can be produced by, for instance, premixing the above-described components, kneading the premixed components using a known kneading machine (e.g. an extruder, heat roller), and forming the kneaded components through a known forming method (e.g. extrusion molding, calendering, injection molding, and casting).

Adherend

The material used for the adherend is not particularly limited. The material of the adherend may be any one of an organic material, an inorganic material (including metal material etc.), and a composite material of an organic material and an inorganic material.

The material of the adherend is preferably an organic material. Examples of the organic material as the material of the adherend include a plastic material and a rubber material. Examples of the plastic material include a polypropylene resin, a polyethylene resin, an epoxy resin, a polyurethane resin, an acrylonitrile-butadienestyrene copolymer resin (ABS resin), a polycarbonate resin (PC resin), a polyamide resin (e.g., nylon 6 and nylon 66), a polyester resin (e.g. polyethylene terephthalate (PET resin) and a polybutylene terephthalate resin (PBT resin)), a polyacetal resin (POM resin), a polymethyl methacrylate resin, and a polystyrene resin. Examples of the rubber material include styrene-butadiene rubber (SBR), ethylene propylene rubber (EPR), and silicone rubber. The adherend may be a foam of the organic material. When the material of the adherend is a thermoplastic resin, it is preferable that the thermoplastic resin contained in the adherend is different from the thermoplastic resin (A) contained in the high-frequency-dielectric-heating adhesive. The adherend, which is more unlikely to be damaged by the above arrangement, can be bonded within a further short time.

Examples of the inorganic material as the material of the adherend include a glass material, a cement material, a ceramic material, and a metal material. Further, the adherend may be a fiber reinforced resin (fiber reinforced plastics (FRP)) that is a composite material of fibers and the above plastic material. The plastic material in the fiber-reinforced resin is at least one resin selected from the group consisting of a polypropylene resin, a polyethylene resin, a polyurethane resin, an acrylonitrile-butadiene-styrene copolymer resin (ABS resin), a polycarbonate resin (PC resin), a polyamide resin (e.g., nylon 6 and nylon 66), a polyester resin (polyethylene terephthalate (PET resin) and a polybutylene terephthalate resin (PBT resin)), a polyacetal resin (POM resin), a polymethyl methacrylate resin, and a polystyrene resin. Examples of fiber in the fiber-reinforced resin include a glass fiber, a Kevlar® fiber, and a carbon fiber.

It is preferable that the adherend has low conductivity.

When a plurality of adherends are to be bonded with the use of the high-frequency-dielectric-heating adhesive according to the exemplary embodiment, the materials of the adherends are the same or different.

The shape of the adherend is not particularly limited. When the high-frequency-dielectric-heating adhesive according to the present exemplary embodiment is in a form of an adhesive sheet, it is preferable that the adherend, which preferably has a surface for the adhesive sheet to be attached to, is sheet-shaped or plate-shaped. When a plurality of adherends are to be bonded, the shape and size of the adherends may be the same or different. The thicknesses of the adherends preferably each independently satisfy a relationship of the above numerical formula (Numerical Formula 3).

Assembly

The assembly according to the present exemplary embodiment includes the high-frequency-dielectric-heating adhesive according to the present exemplary embodiment and the three or more adherends. The three or more adherends of the assembly according to the present exemplary embodiment are bonded by the high-frequency-dielectric-heating adhesive according to the present exemplary embodiment. The assembly according to the present exemplary embodiment is preferably an assembly (laminate) in which the three or more adherend are laminated through the high-frequency-dielectric-heating adhesive.

The three or more adherends are optionally bonded by an adhesive (high-frequency-dielectric-heating adhesive) of the same composition or, alternatively, by adhesives (high-frequency-dielectric-heating adhesives) of mutually different compositions. In the assembly according to the present exemplary embodiment, the composition of the high-frequency-dielectric-heating adhesive is preferably appropriately selected in view of the material of the adherend in contact with the high-frequency-dielectric-heating adhesive, the bonding strength with the adherend, bonding time, and the like.

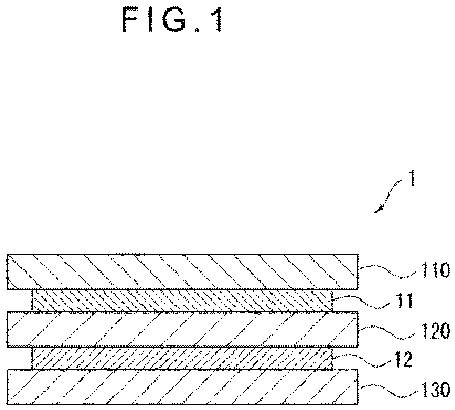

Fig. 1 is a schematic cross-sectional view of an assembly 1 according to an example of the present exemplary embodiment.

The assembly 1 includes three adherends (a first adherend 110, a second adherend 120, and a third adherend 130), a first high-frequency-dielectric-heating adhesive 11 interposed between the first adherend 110 and the second adherend 120, and a second high-frequency-dielectric-heating adhesive 12 interposed between the second adherend 120 and the third adherend 130. The assembly 1 is a laminate, in which the first adherend 110, the first high-frequency-dielectric-heating adhesive 11, the second adherend 120, the second high-frequency-dielectric-heating adhesive 12, and the third adherend 130 are laminated in this order.

When the assembly according to the present exemplary embodiment is in a form of a laminate, the material for the adherend forming the outermost layer of the laminate is preferably an organic material. For instance, in the assembly 1 illustrated in Fig. 1, the materials for the first adherend 110 and the third adherend 130 (outermost layers) are preferably an organic material.

In the assembly according to the present exemplary embodiment, the location, thickness and the like of the high-frequency-dielectric-heating adhesives are not limited to the location, thickness and the like illustrated in Fig. 1.

In the assembly according to the present exemplary embodiment, the shape, size, number and the like of the adherends are not limited to the shape, size, number and the like illustrated in Fig. 1.

The assembly according to the present exemplary embodiment is not limited to an assembly as illustrated in Fig. 1, in which a plurality of adherends are laminated through the high-frequency-dielectric-heating adhesive.

Producing Method of Assembly

The producing method of the assembly according to the present exemplary embodiment includes a step for placing the high-frequency-dielectric-heating adhesive according to the present exemplary embodiment between corresponding ones of the three or more of the adherends and a step for applying a high-frequency electric field to the high-frequency-dielectric-heating adhesive to bond the three or more adherends.

In the producing method of the assembly according to the present exemplary embodiment, it is preferable that the three or more adherends and the high-frequency-dielectric-heating adhesive, which are placed between electrodes of a dielectric heating device, are applied with a high-frequency electric field while being pressed by the electrodes. The assembly is more likely to be produced within a further short time by thus applying the high-frequency electric field while pressing with the electrodes.

According to the producing method using the high-frequency-dielectric-heating adhesive according to the present exemplary embodiment, only a desired part can be locally heated from an outside using a dielectric heating device. Accordingly, the producing method using the high-frequency-dielectric-heating adhesive according to the present exemplary embodiment is effective even when the adherends are in a form of a large-sized and complex three-dimensional assembly, a thick and complex three-dimensional assembly or the like, which requires higher dimensional accuracy.

An example of the producing method of the assembly according to the present exemplary embodiment will be described below with reference to an arrangement for bonding three or more adherends using the high-frequency-dielectric-heating adhesive according to the present exemplary embodiment. It should however be noted that the scope of the invention is not limited by the above arrangement.

A bonding method according to an aspect of the present exemplary embodiment includes Step P1 and Step P2 below.

Step P1

In Step P1, the high-frequency-dielectric-heating adhesive according to the present exemplary embodiment is placed between corresponding ones of the three or more adherends. When an assembly in a form of a laminate according to the present exemplary embodiment is to be produced, the adherends and the high-frequency-dielectric-heating adhesive are, for instance, alternately placed to laminate the three or more adherends through the high-frequency-dielectric-heating adhesive in Step P1.

It is preferable that the high-frequency-dielectric-heating adhesive is held between the adherends so that the adherends can be mutually bonded. The high-frequency-dielectric-heating adhesive is held partially between the adherends, between the adherends at a plurality of points, or between the adherends over the entire surfaces thereof. In order to enhance the bonding strength between the adherends, it is preferable that the high-frequency-dielectric-heating adhesive is held between the adherends over the entire bonding surfaces.

In an example for holding the high-frequency-dielectric-heating adhesive partially between the adherends, the high-frequency-dielectric-heating adhesive is placed in a frame-shape along an outer periphery of the bonding surfaces of the adherends to hold the high-frequency-dielectric-heating adhesive between the adherends. The high-frequency-dielectric-heating adhesive, which is thus placed in a frame-shape, ensures the bonding strength between the adherends and reduces the weight of the assembly as compared with an instance having the high-frequency-dielectric-heating adhesive placed all over the bonding surfaces.

Further, according to the above arrangement where the high-frequency-dielectric-heating adhesive is held partially between the adherends, the used amount and the size of the high-frequency-dielectric-heating adhesive can be reduced, so that the time for the high-frequency dielectric heating process can be shortened as compared with an instance where the high-frequency-dielectric-heating adhesive is placed all over the bonding surfaces.

Step P2

In Step P2, a high-frequency electric field is applied on the high-frequency-dielectric-heating adhesive placed between the adherends in Step P1 to bond the three or more adherends. The frequency of the high-frequency electric field to be applied is, for instance, in a range from 3 MHz to 300 MHz. For instance, a dielectric heating device is used to apply the high-frequency electric field to the high-frequency-dielectric-heating adhesive.

Dielectric Heating Device

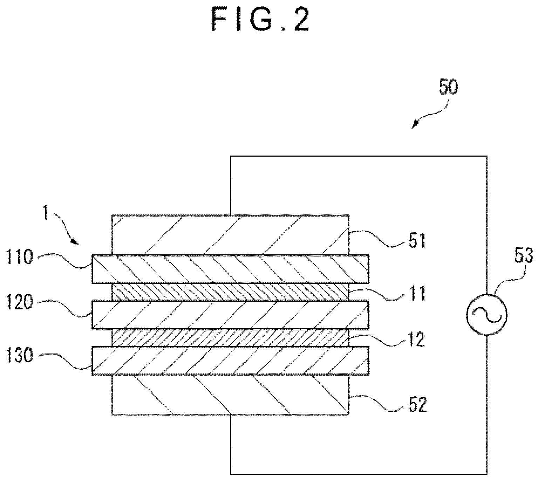

Fig. 2 is a schematic illustration describing a high-frequency dielectric heating process performed with the use of the high-frequency-dielectric-heating adhesive and a dielectric heating device according to the exemplary embodiment.

A dielectric heating device 50 illustrated in Fig. 2 includes a first high-frequency electric field application electrode 51, a second high-frequency electric field application electrode 52, and a high-frequency power source 53.

The first high-frequency electric field application electrode 51 and the second high-frequency electric field application electrode 52 are mutually oppositely disposed. The first high-frequency electric field application electrode 51 and the second high-frequency electric field application electrode 52 have a press mechanism. The press mechanism of the electrodes (the first high-frequency electric field application electrode 51 and the second high-frequency electric field application electrode 52) of the dielectric heating device 50 allows the three or more adherends and the high-frequency-dielectric-heating adhesive disposed between the electrodes to be pressed while being applied with the high-frequency electric field.

Fig. 2 depicts an example of a method for producing the assembly 1 (see Fig. 1) using the dielectric heating device 50. With the use of the dielectric heating device 50, the first adherend 110, the first high-frequency-dielectric-heating adhesive 11, the second adherend 120, the second high-frequency-dielectric-heating adhesive 12, and the third adherend 130 can be pressed between the first high-frequency electric field application electrode 51 and the second high-frequency electric field application electrode 52.

An arrangement of electrodes in which the first high-frequency electric field application electrode 51 and the second high-frequency electric field application electrode 52 form a pair of mutually parallel plate electrodes is sometimes referred to as a "parallel-plate type."

A high-frequency dielectric heating device in a parallel-plate type is also preferably used to apply a high-frequency electric field. The parallel-plate type high-frequency dielectric heating device, in which the high-frequency electric field penetrates through the high-frequency-dielectric-heating adhesive located between the electrodes, can heat the entirety of the high-frequency-dielectric-heating adhesive, thus bonding the adherends and the high-frequency-dielectric-heating adhesive within a short time. A parallel-plate type high-frequency dielectric heating device is preferably used in order to produce an assembly in a form of a laminate.

The high-frequency power source 53 for applying high-frequency (e.g. approx. 13.56 MHz, approx. 27.12 MHz or approx. 40.68 MHz) waves is connected to both of the first high-frequency electric field application electrode 51 and the second high-frequency electric field application electrode 52.

As illustrated in Fig. 2, the dielectric heating device 50 performs dielectric heating process through the first high-frequency-dielectric-heating adhesive 11 and the second high-frequency-dielectric-heating adhesive 12 held between corresponding ones of the first adherend 110, second adherend 120, and the third adherend 130. In addition to the dielectric heating, the dielectric heating device 50 bonds the first adherend 110, the second adherend 120, and the third adherend 130 through a pressurization process by the first high-frequency electric field application electrode 51 and the second high-frequency electric field application electrode 52. It should be noted that the three or more adherends are optionally bonded through pressurization solely by, for instance, self weights of the high-frequency-dielectric-heating adhesive and the adherends without performing the pressurization process.

When a high-frequency electric field is applied between the first high-frequency electric field application electrode 51 and the second high-frequency electric field application electrode 52, the dielectric filler (not shown), which is dispersed in the components of the first and second high-frequency-dielectric-heating adhesives 11 and 12, absorbs energy of the high-frequency waves.

The dielectric filler, which serves as a heat source, generates heat to melt the thermoplastic resin component, thereby eventually firmly bonding the first adherend 110, the second adherend 120, and the third adherend 130 even through a short-time process.

The first high-frequency electric field application electrode 51 and the second high-frequency electric field application electrode 52, which have a press mechanism, serve as a press machine. Accordingly, the first adherend 110, the second adherend 120, and the third adherend 130 can be more firmly bonded by applying a pressure in a compression direction by the first and second high-frequency electric field application electrodes 51, 52 and by heating and melting the first and second high-frequency-dielectric-heating adhesives 11, 12 by the first and second high-frequency electric field application electrodes 51, 52. It should be noted that the producing method of the assembly according to the invention, which is described with reference to an example for producing the assembly 1 illustrated in Fig. 1 in the description below, is not limited by this example.

High-Frequency Dielectric Heating Conditions

The high-frequency dielectric heating conditions, which can be altered as necessary, are preferably as follows.

The output of the high-frequency electric field is preferably 10 W or more, more preferably 30 W or more, still more preferably 50 W or more, and still further more preferably 80 W or more.

The output of the high-frequency electric field is preferably 50,000 W or less, more preferably 20,000 W or less, still more preferably 15,000 W or less, still further more preferably 10,000 W or less, and yet still further more preferably 1,000 W or less.

With the output of the high-frequency electric field being 10 W or more, difficulty in increasing the temperature during the dielectric heating process is preventable, thereby easily achieving a sufficient bonding strength.

With the output of the high-frequency electric field output being 50,000 W or less, difficulty in controlling the temperature when the dielectric heating is performed is easily preventable.

The application time of the high-frequency electric field is preferably one second or more.

The application time of the high-frequency electric field is preferably 300 seconds or less, more preferably 240 seconds or less, still more preferably 180 seconds or less, still further more preferably 120 seconds or less, yet still further more preferably 90 seconds or less.

With the application time of the high-frequency electric field being one second or more, difficulty in temperature rise during the dielectric heating process is preventable, thereby easily achieving a sufficient bonding force.

With the application time of the high-frequency waves of 300 seconds or less, difficulties that production efficiency of the assembly is lowered, production cost is increased, and the adherends are thermally degraded are easily preventable.

The frequency of the high-frequency electric field to be applied is preferably 1 kHz or more, more preferably 1 MHz or more, still more preferably 5 MHz or more, and still further more preferably 10 MHz or more.

The frequency of the high-frequency electric field to be applied is preferably 300 MHz or less, more preferably 100 MHz or less, still more preferably 80 MHz or less, and still further more preferably 50 MHz or less. Specifically, 13.56 MHz, 27.12 MHz, or 40.68 MHz, which is the industrial frequency band assigned by International Telecommunication Union, is also used in the producing method and bonding method using the high-frequency dielectric heating of the present exemplary embodiment.

Effects of Exemplary Embodiment

The high-frequency-dielectric-heating adhesive according to the present exemplary embodiment, which satisfies the relationship of the above numerical formulae (Numerical Formula 1 and (Numerical Formula 2), generates heat preferentially to the adherends and is likely to prevent deformation and damage on the adherends. As a result, the high-frequency-dielectric-heating adhesive according to the present exemplary embodiment can bond three or more adherends in a single process within a short time. Further, the present exemplary embodiment can provide an assembly including three or more adherends bonded by the high-frequency-dielectric-heating adhesive, and a producing method of the assembly. The assembly provided by bonding the three or more adherends can be produced within a short time by the producing method of the assembly.

The high-frequency-dielectric-heating adhesive is excellent in terms of water resistance and moisture resistance as compared with a typical adhesive.

The high-frequency-dielectric-heating adhesive according to the present exemplary embodiment is locally heated by applying the high-frequency electric field. Accordingly, damage on the entirety of the adherends during a bonding process with the adherends is likely to be prevented with the use of the high-frequency-dielectric-heating adhesive according to the present exemplary embodiment.

Modifications of Exemplary Embodiment

The invention is not limited to the above exemplary embodiment. The invention can include any modifications, improvements, and the like compatible with an object of the invention.

The high-frequency dielectric heating process does not necessarily use the dielectric heating device provided with the electrodes oppositely placed as described in the exemplary embodiment, but a lattice-electrode high-frequency dielectric heating device is alternatively usable. The lattice-electrode high-frequency dielectric heating device includes a lattice electrode, in which electrodes having a first polarity and electrodes having a second polarity are alternately coplanarly arranged at regular intervals, the first polarity being opposite to the second polarity. It should be noted that the illustrated exemplary dielectric heating device includes oppositely disposed electrodes for simplification.

Examples

The invention will be described below in further detail with reference to Examples. The invention is by no means limited to these Examples.

Production of High-Frequency-Dielectric-Heating Adhesive

Examples 1 to 4 and Comparatives 1 to 2

The thermoplastic resin (A) and the dielectric filler (B) listed in Table 1 were premixed. The premixed materials were fed into a hopper of a biaxial extruder with 30-mm hole diameter, and were melted and kneaded at a cylinder setting temperature of 200 degrees C and die temperature of 200 degrees C. After cooling the melted and kneaded material, the material was cut to produce granular pellets. Subsequently, the produced granular pellets were loaded into a hopper of a uniaxial extruder provided with a T-die. Then, a film-shaped kneaded product, which was extruded from the T-die (cylinder temperature: 200 degrees C, die temperature: 200 degrees C), was cooled by a cooling roller to produce a 300-$\mu$m thick sheet-shaped high-frequency-dielectric-heating adhesive (high-frequency-dielectric-heating adhesive sheet) according to Examples 1 to 4 and Comparatives 1 to 2.

Details of the thermoplastic resins (A), the dielectric fillers (B), and the adherends listed in Table 1 are as follows.

Thermoplastic Resin (A)

EVA: ethylene-vinyl acetate copolymer resin (content of vinyl acetate: 15 mass%)
Maleic anhydride PP: polypropylene having maleic anhydride moiety
Styrene-maleic anhydride copolymer:
Maleic anhydride EA: ethylene-acryl-maleic anhydride copolymer

Dielectric Filler (B)

ZnO: zinc oxide (manufactured by SAKAI CHEMICAL INDUSTRY CO., LTD., product name "LP-ZINC11").

Volume Average Particle Diameter of Dielectric Filler

The particle size distribution of the dielectric filler was measured by a laser diffraction/scattering method. The volume average particle diameter was calculated from a result of the measurement of particle size distribution in accordance with JIS Z 8819-2: 2001. The calculated volume average particle diameter of zinc oxide (ZnO) was 11 $\mu$m.

Adherend

Plate-shaped adherends (length: 75 mm, width: 25 mm, thickness: 2 mm) were produced using materials below.

LDPE: low-density polyethylene
PC: polycarbonate resin
Epoxy resin: epoxy resin was used as a resin having no flow start temperature.

Olefin elastomer: $\alpha$-olefin copolymer

PVC (ZnO: 10 vol%): resin containing polyvinyl chloride resin (90 vol%) and zinc oxide (10 vol%)Zinc oxide (manufactured by SAKAI CHEMICAL INDUSTRY CO., LTD., product name "LP-ZINC11")

Flow Start Temperature

The flow start temperatures of the thermoplastic resin and the high-frequency-dielectric-heating adhesive were measured using a drop flow tester (model No. "CFT-100D" manufactured by Shimadzu Corporation). A stroke displacement rate (mm/min) that changed depending on rising temperature was measured at a load of 5.0 kg using a die (hole diameter: 2.0 mm, hole length: 5.0 mm) and a cylinder (inner diameter: 11.329 mm) while raising a temperature of a measurement sample at a rate of 10 degrees C/min, thereby obtaining a temperature-dependent chart of the stroke displacement rate of the measurement sample. In this chart, a temperature at which the stroke-displacement temperature rose again after passing through the peak appearing at the lower temperature was determined as the flow start temperature. The flow start temperature of the adherends was measured in the same manner as described above on measurement samples produced by cutting the adherends into pieces (size: approximately 2 mm $\times$ 2 mm $\times$ 2 mm).

Thickness Accuracy

Thicknesses of randomly selected 25 points of the adhesive sheet were measured under a condition of 23 degrees C. The thickness was measured using a constant-pressure thickness gauge (model number "PG-02J" in accordance with standards JIS K 6783, JIS Z 1702, and JIS Z 1709) manufactured by TECLOCK Co., Ltd. Average $T_{ave}$ of the thicknesses, maximum value $T_{max}$ of the thicknesses, and minimum value $T_{min}$ of the thicknesses were calculated on the basis of the measurement results. The thickness accuracy on a plus side was calculated according to a numerical formula (Numerical Formula 4A) below. The thickness accuracy on a minus side was calculated according to a numerical formula (Numerical Formula 4B) below. The thickness accuracy is displayed is based on a larger one of the values of the thickness accuracies on the plus and minus sides. For instance, when the value of the thickness accuracy on the plus side is +3% and the value of the thickness accuracy on the minus side is -2%, the thickness accuracy is displayed to be $\pm$3%.

$$\{(T_{max} - T_{ave})/T_{ave}\} \times 100 \qquad \ldots \text{(Numerical Formula 4A)}$$

$$\{(T_{min} - T_{ave})/T_{ave}\} \times 100 \qquad \ldots \text{(Numerical Formula 4B)}$$

Dielectric Property

The adhesive sheet was cut into pieces of 30 mm (length) $\times$ 30 mm (width). Plate-shaped adherends (length: 30 mm, width: 30 mm, thickness: 2 mm) were also produced using the above-described materials. The resultant cut pieces of the adhesive sheet and the produced adherends were attached to a dielectric material test fixture 16453A (manufactured by Agilent Technologies, Inc.). The relative permittivity ($\varepsilon$'r) and the dielectric dissipation factor (tan$\delta$) of each of the resultant cut pieces of the adhesive sheet and the produced adherends were measured at 23 degrees C at 40.68 MHz frequency using an RF impedance material analyzer E4991A (manufactured by Agilent Technologies, Inc.) according to a parallel-plate method. The value of the dielectric property (tan$\delta$/$\varepsilon$'r) was calculated on the basis of the measurement results.

Evaluation of High-Frequency-Dielectric-Heating Adhesive

The high-frequency-dielectric-heating adhesive (adhesive sheet) was evaluated as follows. Evaluation results are shown in Table 1.

Adhesiveness

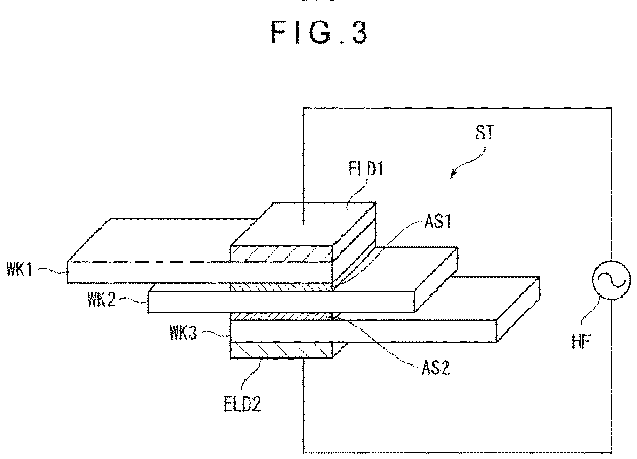

An assembly ST was produced by laminating three adherends WK1, WK2, WK3 as illustrated in Fig. 3. It should be noted that diagonal lines are drawn in a part of sections of the electrodes and the adhesive sheets in Fig. 3 in order to help distinguishing the electrodes from the adhesive sheets.

Initially, the produced high-frequency-dielectric-heating adhesives (adhesive sheets) were cut into pieces (length: 25 mm, width: 25 mm) to prepare two adhesive sheets AS1, AS2. Plate shaped adherends WK1, WK3 (length:

75 mm, width: 25 mm, thickness: 2 mm) and a plate-shaped adherend WK2 (length: 55 mm, width: 25 mm, thickness: 2 mm) were laminated. The adhesive sheets AS1, AS2 were placed at the longitudinal ends of the adherends WK1, WK3 and at the longitudinal center of the adherend WK2 when the adherends WK1, WK2, WK3 were laminated. The adherends WK1, WK2, WK3 were all made of the same material. The laminated adherends and adhesive sheets were fixed between electrodes ELD1, ELD2 of a high-frequency dielectric heating device (product name "YRP-400T-A" manufactured by YAMAMOTO VINITA CO., LTD.). Press surfaces of the electrodes ELD1, ELD2 were shaped in a square of 25 mm × 25 mm. As also illustrated in Fig. 3, the adhesive sheets AS1, AS2 and the electrodes ELD1, ELD2 were fixed to be mutually overlapped. With thus being fixed, the adhesive sheets and the adherends were bonded by applying a high-frequency electric field by a high-frequency power source HF connected to the electrodes ELD1, ELD2 under the high-frequency electric field application conditions below to produce an adhesiveness evaluation test piece (assembly ST). Pressing pressure at the time of applying the high-frequency electric field is a pressure applied at the bonding portions of the adherends.

High-Frequency Electric Field Application Conditions

> Frequency : 40.68 MHz
> Output: 200 W
> Application time: 20 seconds
> Pressing pressure: 0.16 MPa

The adhesiveness of the produced adhesiveness evaluation test piece was evaluated according to the following standards.

> A: Bonding strength of all of the three adherends was 1 MPa or more and the adherends were not deformed.
> F: The adherends were deformed in producing the test piece.

Tensile shear strengths (bonding force) (unit: MPa) were measured for the adhesiveness evaluation test pieces produced with the use of the high-frequency-dielectric-heating adhesives in Examples 1 to 4.

The tensile shear strength was measured using a universal tensile tester (product name "INSTRON 5581" manufactured by Instron Corporation). The tensile shear strength was measured at a tension rate of 10 mm/min. The tensile shear force was measured in accordance with JIS K 6850 (1999) after holding the adherend WK1 and the adherend WK3 between chucks of the tester. As a result, it was found that the bonding strength of all of the adhesiveness evaluation test pieces produced with the use of the high-frequency-dielectric-heating adhesives in Examples 1 to 4 was 1 MPa or more.

Table 1

| | Composition and properties of Adhesive | | | | | | | | Adherend | | | Difference in flow start temperature TF2-TF1 [°C] | Difference in Dielectric property DP1-DP2 [-] | adhesivity |
| | Composition | | | | Properties | | | | | Properties | | | | |
| | Thermoplastic resin (A) | | Dielectric filler (B) | | Flow start temperature TF1 [°C] | Dielectric property DP1 [-] | Thickness [μm] | Thickness accuracy | Composition | Flow start temperature TF2 [°C] | Dielectric property DP2 [-] | | | |
| | Type | Content [vol%] | Type | Content [vol%] | | | | | | | | | | |
| Ex. 1 | EVA | 80 | Zinc oxide | 20 | 105 | 0.019 | 300 | ±3% | LDPE | 123 | 0.000 | 18 | 0.019 | A |
| Ex. 2 | Maleic anhydride PP | 80 | Zinc oxide | 20 | 153 | 0.013 | 300 | ±4% | PC | 197 | 0.000 | 44 | 0.013 | A |
| Ex. 3 | Maleic anhydride PP | 80 | Zinc oxide | 20 | 153 | 0.013 | 300 | ±4% | Epoxy resin | N/A | 0.000 | - | 0.013 | A |
| Ex. 4 | Styrene maleic anhydride copolymer | 80 | Zinc oxide | 20 | 132 | 0.015 | 300 | ±3% | Epoxy resin | N/A | 0.000 | - | 0.015 | A |
| Comp. 1 | EVA | 80 | Zinc oxide | 20 | 105 | 0.019 | 300 | ±3% | Olefin elastomer | 94 | 0.000 | -11 | 0.019 | F |
| Comp. 2 | Maleic anhydride EA | 90 | Zinc oxide | 10 | 95.3 | 0.006 | 300 | ±5% | PVC (ZnO: 10vol%) | 188 | 0.012 | 93 | -0.006 | F |

19

The high-frequency-dielectric-heating adhesives according to Examples 1 to 4 can bond the three adherends in a single process within a short time. The three adherends of the assembly (laminate) produced with the use of the high-frequency-dielectric-heating adhesives according to Examples 1 to 4 were bonded at a bonding strength of 1 MPa or more.

It is believed that, when the adherends were bonded using the high-frequency-dielectric-heating adhesive of Comparative 1, the adherends were deformed because the flow start temperature TF1 of the adhesive of Comparative 1 was significantly higher than the flow start temperature TF2 of the adherends.

It is believed that, when the adherends were bonded using the high-frequency-dielectric-heating adhesive of Comparative 2, the adherends were deformed because the dielectric property DP1 of the adhesive of Comparative 2 was smaller than the dielectric properties DP2 of the adherends, so that the adherends were melted before the high-frequency-dielectric-heating adhesive was melted.

EXPLANATION OF CODES

1... assembly, 11...first high-frequency-dielectric-heating adhesive, 12... second high-frequency-dielectric-heating adhesive, 50... dielectric heating device, 51 ...first high-frequency electric field application electrode, 52...second high-frequency electric field application electrode, 53... high-frequency power source, 110...first adherend, 120...second adherend, 130...third adherend, AS1...adhesive sheet, AS2... adhesive sheet, ELD1 ... electrode, ELD2... electrode, HF... high-frequency power source, ST... assembly, WK1... adherend, WK2... adherend, WK3... adherend

**Claims**

1. A high-frequency-dielectric-heating adhesive configured to bond three or more adherends to each other, the high-frequency-dielectric-heating adhesive comprising:

   a thermoplastic resin; and
   a dielectric filler configured to generate heat upon application of a high-frequency electric field, wherein
   a dielectric property DP1 of the high-frequency-dielectric-heating adhesive and a dielectric property DP2 of each of the adherends satisfy a relationship of a numerical formula (Numerical Formula 1) below, and
   the three or more adherends each have a flow start temperature or no flow start temperature, a flow start temperature TF2 (degrees C) of each of the adherends and a flow start temperature TF1 (degrees C) of the high-frequency-dielectric-heating adhesive satisfy a relationship of a numerical formula (Numerical Formula 2) below,

$$0 < DP1 - DP2 \ldots \text{(Numerical Formula 1)}$$

$$-5 \leq TF2 - TF1 \ldots \text{(Numerical Formula 2)}$$

   where the dielectric property DP1 and the dielectric property DP2 are respectively values of dielectric properties ($\tan\delta/\varepsilon'r$) of the high-frequency-dielectric-heating adhesive and the three or more adherends,
   $\tan\delta$ is a dielectric dissipation factor at 23 degrees C at a frequency of 40.68 MHz, and
   $\varepsilon'r$ is a relative permittivity at 23 degrees C at a frequency of 40.68 MHz.

2. The high-frequency-dielectric-heating adhesive according to claim 1, wherein, when at least one of the three or more adherends is an adherend having the flow start temperature, the flow start temperature TF2 of the at least one of the three or more adherends having the flow start temperature is 90 degrees C or more.

3. The high-frequency-dielectric-heating adhesive according to claim 1 or 2, wherein the flow start temperature TF1 of the high-frequency-dielectric-heating adhesive is in a range from 80 degrees C to 200 degrees C.

4. The high-frequency-dielectric-heating adhesive according to any one of claims 1 to 3, wherein the dielectric property DP2 of all of the three or more adherends is 0.015 or less.

5. The high-frequency-dielectric-heating adhesive according to any one of claims 1 to 4, wherein the dielectric property DP1 of the high-frequency-dielectric-heating adhesive is 0.005 or more.

6. The high-frequency-dielectric-heating adhesive according to any one of claims 1 to 5, wherein the high-frequency-dielectric-heating adhesive is in a form of an adhesive sheet.

7. The high-frequency-dielectric-heating adhesive according to claim 6, wherein a thickness TS1 of the adhesive sheet and a thickness TS2 of each of the three or more adherends satisfy a relationship of a numerical formula (Numerical Formula 3) below,

$$TS1 < TS2 \qquad \ldots(\text{Numerical Formula 3}).$$

8. The high-frequency-dielectric-heating adhesive according to claim 6 or 7, wherein the thickness TS1 of the adhesive sheet is in a range from 5 $\mu$m to 2000 $\mu$m.

9. The high-frequency-dielectric-heating adhesive according to any one of claims 6 to 8, wherein a thickness accuracy of the adhesive sheet is within $\pm$10%.

10. An assembly comprising: the high-frequency-dielectric-heating adhesive according to any one of claims 1 to 9 and the three or more adherends bonded by the high-frequency-dielectric-heating adhesive.

11. A producing method of an assembly, the method comprising:

placing the high-frequency-dielectric-heating adhesive according to any one of claims 1 to 9 between corresponding ones of the three or more adherends; and
applying a high-frequency electric field to the high-frequency-dielectric-heating adhesive to bond the three or more adherends to each other.

12. The producing method of an assembly according to claim 11, wherein the three or more adherends and the high-frequency-dielectric-heating adhesive are placed in between electrodes of a dielectric heating device, and
the high-frequency electric field is applied while the three or more adherends and the high-frequency-dielectric-heating adhesive are pressed by the electrodes.

FIG.1

# FIG.2

# FIG.3

## INTERNATIONAL SEARCH REPORT

| International application No. |
| --- |
| **PCT/JP2021/043771** |

**A. CLASSIFICATION OF SUBJECT MATTER**

***B32B 27/00***(2006.01)i; ***B32B 27/18***(2006.01)i; ***C09J 11/04***(2006.01)i; ***C09J 201/00***(2006.01)i; ***C09J 7/10***(2018.01)i; ***C09J 7/30***(2018.01)i; ***H05B 6/54***(2006.01)i; ***B32B 7/027***(2019.01)i

FI:   C09J201/00; H05B6/54; C09J11/04; C09J7/30; C09J7/10; B32B27/18 Z; B32B27/00 D; B32B7/027

According to International Patent Classification (IPC) or to both national classification and IPC

**B. FIELDS SEARCHED**

Minimum documentation searched (classification system followed by classification symbols)

B32B27/00; B32B27/18; C09J11/04; C09J201/00; C09J7/10; C09J7/30; H05B6/54; B32B7/027

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN); Japio-GPG/FX

**C. DOCUMENTS CONSIDERED TO BE RELEVANT**

| Category* | Citation of document, with indication, where appropriate, of the relevant passages | Relevant to claim No. |
| --- | --- | --- |
| X | WO 2020/203206 A1 (LINTEC CORP) 08 October 2020 (2020-10-08) paragraphs [0028]-[0066], [0094], [0103]-[0118], fig. 1-4 | 1-12 |
| Y | | 1-12 |
| Y | WO 2018/079354 A1 (LINTEC CORP) 03 May 2018 (2018-05-03) paragraphs [0042]-[0060], fig. 5 | 1-12 |
| A | JP 2010-6908 A (DENSO CORP) 14 January 2010 (2010-01-14) examples | 1-12 |
| A | JP 2020-70365 A (LINTEC CORP) 07 May 2020 (2020-05-07) examples | 1-12 |
| A | JP 2018-177825 A (LINTEC CORP) 15 November 2018 (2018-11-15) examples | 1-12 |
| A | JP 2014-213524 A (NIPPON ELECTRIC GLASS CO) 17 November 2014 (2014-11-17) examples | 1-12 |

☑ Further documents are listed in the continuation of Box C.     ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **28 January 2022** | **15 February 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2021/043771**

**C.      DOCUMENTS CONSIDERED TO BE RELEVANT**

| Category* | Citation of document, with indication, where appropriate, of the relevant passages | Relevant to claim No. |
|---|---|---|
| P, A | WO 2021/200686 A1 (LINTEC CORP) 07 October 2021 (2021-10-07)<br>examples | 1-12 |

Form PCT/ISA/210 (second sheet) (January 2015)

**INTERNATIONAL SEARCH REPORT**
Information on patent family members

International application No.

**PCT/JP2021/043771**

| Patent document cited in search report | | | Publication date (day/month/year) | Patent family member(s) | | | Publication date (day/month/year) |
|---|---|---|---|---|---|---|---|
| WO | 2020/203206 | A1 | 08 October 2020 | (Family: none) | | | |
| WO | 2018/079354 | A1 | 03 May 2018 | JP | 2019-94503 | A | |
| | | | | US | 2020/0063001 | A1 | |
| | | | | paragraphs [0138]-[0169], fig. 5 | | | |
| | | | | US | 2019/0283334 | A1 | |
| | | | | US | 2019/0329504 | A1 | |
| | | | | US | 2019/0352546 | A1 | |
| | | | | US | 2020/0010730 | A1 | |
| | | | | WO | 2018/079355 | A1 | |
| | | | | WO | 2018/079356 | A1 | |
| | | | | WO | 2018/147351 | A1 | |
| | | | | WO | 2018/147352 | A1 | |
| | | | | EP | 3533847 | A1 | |
| | | | | EP | 3533848 | A1 | |
| | | | | EP | 3533849 | A1 | |
| | | | | CN | 109923184 | A | |
| | | | | KR | 10-2019-0075935 | A | |
| | | | | CN | 109890923 | A | |
| | | | | CN | 109890925 | A | |
| | | | | TW | 201840776 | A | |
| | | | | TW | 201843266 | A | |
| | | | | CN | 110291166 | A | |
| | | | | CN | 110300782 | A | |
| JP | 2010-6908 | A | 14 January 2010 | (Family: none) | | | |
| JP | 2020-70365 | A | 07 May 2020 | (Family: none) | | | |
| JP | 2018-177825 | A | 15 November 2018 | (Family: none) | | | |
| JP | 2014-213524 | A | 17 November 2014 | (Family: none) | | | |
| WO | 2021/200686 | A1 | 07 October 2021 | (Family: none) | | | |

Form PCT/ISA/210 (patent family annex) (January 2015)

**EP 4 257 353 A1**

## REFERENCES CITED IN THE DESCRIPTION

**Patent documents cited in the description**

- JP 2003252658 A
- JP 11187626 A